# EUROPEAN PATENT SPECIFICATION

(11) **EP 1 869 960 B1**
(45) Date of publication and mention of the grant of the patent: **29.04.2009**
(21) Application number: 07109120.1
(22) Date of filing: 29.05.2007
(51) Int. Cl.: A01B 63/10

(54) **Assembly for lifting and lowering a farm tractor-towed implement.**
Anordnung zur Anhebung und Senkung einer von einem Ackerschlepper gezogenen Vorrichtung
Ensemble destiné à lever et à abaisser un outil remorqué par un tracteur agricole

(30) Priority: 20.06.2006 IT BO20060475
(43) Date of publication of application: 26.12.2007
(73) Proprietor: CNH Italia S.p.A., 41100 Modena (IT)
(72) Inventor: Sghedoni, Lorenzo, Modena (IT); Pertusi, Franco, Modena (IT)
(74) Representative: CNH IP Department

(56) References cited:
- DE-A1- 3 318 114
- DE-C- 819 942
- GB-A- 2 219 920

## Description

The present invention relates to an assembly for lifting and lowering a farm tractor-towed implement.

Devices for lifting tractor-towed farm implements are described in documents GB-A-2 147 187 (Fiat Trattori SpA), and GB-A-2 219 920 (Fiatgeotech - Tecnologie per la Terra SpA).

In both cases, the assembly for lifting/lowering the implement connected to the tractor comprises:
- a first device for attaching the implement to the tractor;
- a second lifting device for lifting and lowering the implement;
- a third control and adjustment device having a lever mechanism between the first and second device to set the implement operating mode; and
- a fourth device for controlling up/down movement of the implement in so-called "fast operating" mode, whereby the implement is lifted or lowered at high speed.

In the known state of the art, the fourth device (i.e. for controlling up/down movement of the implement in "fast operating" mode) only provides for full up/down movement, i.e. with no intermediate lifting device settings and no neutral position.

It is therefore an object of the present invention to provide a lifting/lowering assembly, which also provides for intermediate up/down settings, with the addition of a neutral position.

According to the present invention, there is provided an assembly for lifting/lowering a farm tractor-towed implement, as claimed in claim 1.

A non-limiting embodiment of the present invention will be described by way of example with reference to the accompanying drawings, in which:
Figure 1 shows a partial view in perspective of an assembly for lifting/lowering a tractor-towed farm implement;
Figures 2 and 3 show larger-scale partial views of details of the Figure 1 assembly;
Figure 4 shows a three-dimensional view of a mechanical device for controlling fast operation of the implement, and which forms part of the Figure 1, 2, 3 assembly;
Figure 5 shows a larger-scale view of parts of the Figure 4 mechanical device in a first configuration;
Figure 6 shows the larger-scale Figure 5 parts in a second configuration;
Figure 7 shows a plan view and cross section A-A of a first part of the mechanical device in Figures 4, 5, 7;
Figure 8 shows a plan view and cross section B-B of a second part of the mechanical device in Figures 4, 5, 7.

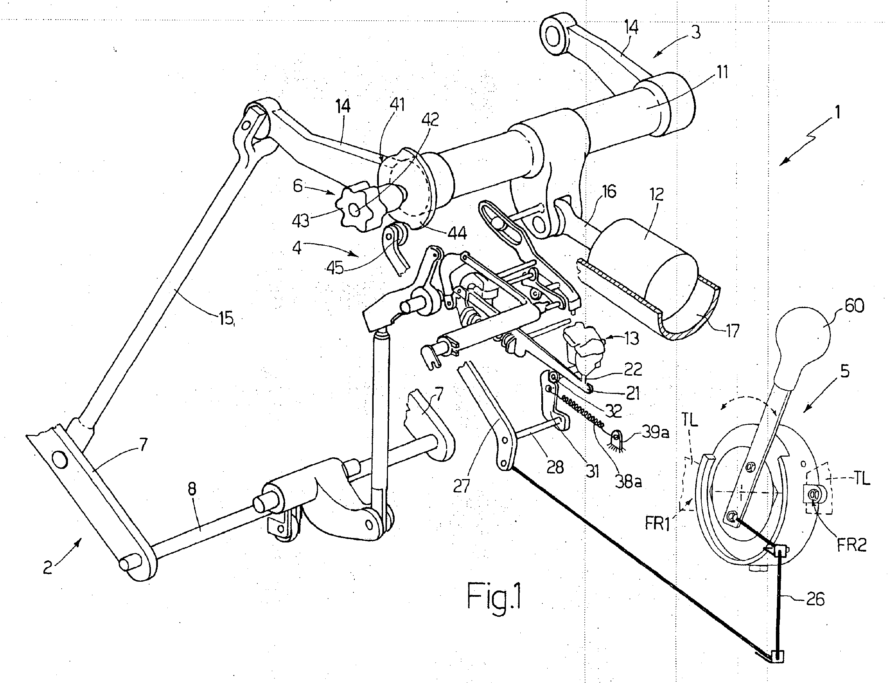

Number 1 in Figure 1 indicates as a whole an assembly for lifting and lowering an implement towed or carried by a farm tractor (not shown).

Assembly 1 is substantially similar to the one described, for example, in patent document GB-A-2 219 920 (Fiatgeotech - Tecnologie per la Terra SpA) referred to above, and the detailed description of which is considered an integral part of the present description.

Assembly 1 comprises a first device 2 for attaching the implement to the farm tractor; a second device 3 for lifting and lowering the implement; a third mechanical device 4 for controlling and adjusting up/down movement of the implement according to the operating conditions of the implement; a hand-operated fourth mechanical device 5 for controlling fast operation of the implement, without third device 4 being operated; and a fifth device 6 for limiting upward travel of the implement in fast operating mode.

With reference to Figure 1, first device 2 comprises two bottom arms 7 connecting the implement to a flexion bar 8 fitted to the tractor in a manner not shown.

Second device 3 is a hydraulic lifting device, and comprises a rotating bar 11, a hydraulic piston 12, a control pump (not shown), and a hydraulic distributor 13.

Two lateral arms 14 extend from the longitudinal ends of bar 11, and are hinged at the ends to the top ends of two vertical ties 15 hinged at the bottom ends to the two bottom arms 7. The end of a rod 16 is hinged to the central portion of bar 11, and extends from piston 12, which is slid along a hollow cylinder 17 by pressurized oil supplied by said pump by means of distributor 13. The pressurized oil rotates bar 11 clockwise to lift the implement by means of vertical ties 15, and drainage of the oil from cylinder 17 by the weight of the implement rotates bar 11 anticlockwise.

Control and adjustment device 4 provides for various operating modes, depending on the implements used and working requirements. For a complete description of device 4, the reader is referred to patent document GB-A-2 147 187 (Fiat Trattori SpA).

Device 4 substantially comprises a lever mechanism located between flexion bar 8 and rotating bar 11, and which is controlled and adjusted by the position, along respective guides, of two hand-operated levers in the tractor operator cab. The levers - known respectively as a "draft control lever" and "position control lever" - provide for operating the implement in different modes, namely : "controlled-position" mode, in which the position of the implement with respect to the tractor remains constant; "controlled-draft" mode, in which the position of the implement varies automatically, so that the pull demanded of the tractor remains constant; "floating" mode, in which the implement is free to move vertically; and "combined controlled-position and -draft" mode, in which the position of the implement is only allowed to vary, as a function of pull, above a predetermined maximum ground depth.

Device 4 acts on distributor 13 by means of a lever 21, the position of which activates rotating bar 11. More specifically, one end of lever 21 acts upwards on a valve 22 of distributor 13.

Hand-operated mechanical device 5 controls lifting/lowering of the implement.

By means of device 5, the implement can therefore be lifted and lowered with no intervention on the part of the control levers, which remain in the predetermined position.

As will be seen, device 5 acts directly on lever 21 and therefore on hydraulic distributor 13.

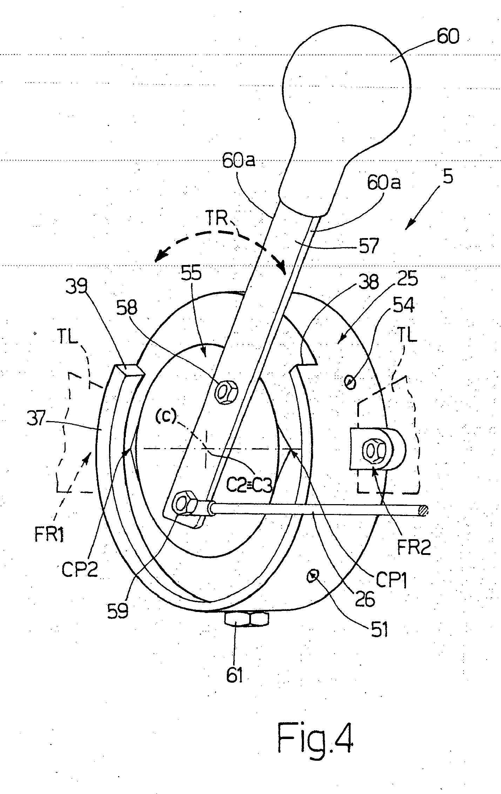

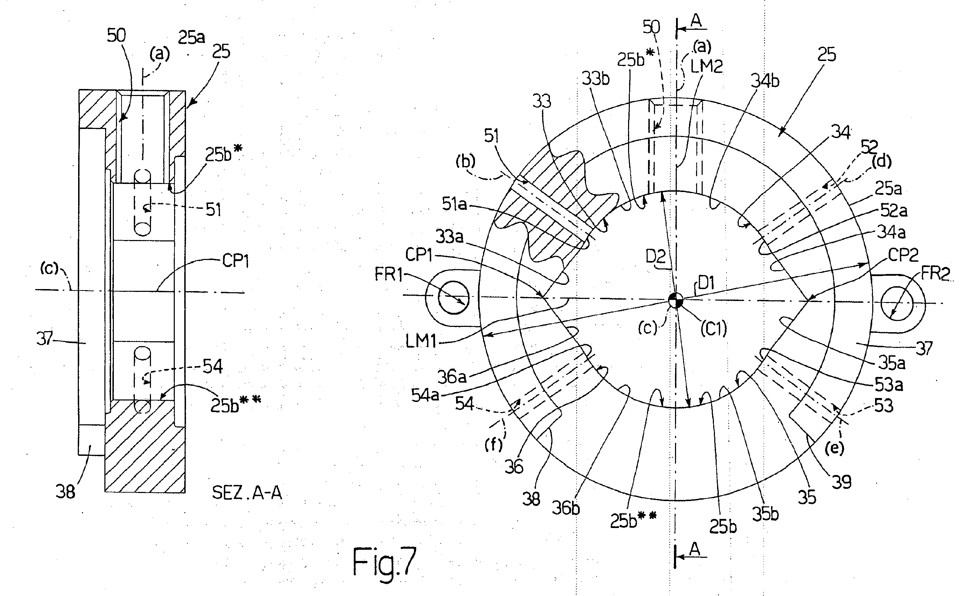

As shown in Figures 4, 5, 6, 7, 8, hand-operated mechanical device 5 - which, in use, is located close to the operator seat - comprises a metal ring 25 having a circular outer profile 25a of a first diameter D1 (Figure 7), and a contoured through hole 25b centred with respect to circular outer profile 25a.

Contoured hole 25b in turn comprises two inner profiles 25b* and 25b** mirrorly symmetrical with respect to a first centreline LM1. The two inner profiles 25b*, 25b** being identical, the following description of profile 25b* applies to both.

Inner profiles 25b* and 25b** are joined at cusp points CP1, CP2 lying along first centreline LM1.

More specifically, inner profile 25b* comprises two portions 33, 34 specularly symmetrical with respect to a second centreline LM2. The two centrelines LM1, LM2 are perpendicular to each other, and intersect at a centre point (C1).

As shown particularly in Figure 7, portion 33 comprises a first sector 33a in the form of a substantially straight ramp; and a second sector 33b substantially in the form of an arc of a circle.

Similarly, portion 34 can be divided ideally into a first sector 34a in the form of a substantially straight ramp; and a second sector 34b substantially in the form of an arc of a circle. The same applies to inner profile 25b**, which comprises portions 35 and 36, in turn comprising sectors 35a, 35b and 36a, 36b respectively. Sectors 33b, 34b, 35b, 36b lie on an ideal circle having a second diameter D2 (Figure 7).

As shown particularly in Figure 7, an annular projection 37 is located between circular outer profile 25a and inner profiles 25b* and 25b**, and has two breaks defining two stops 38, 39 facing centre point (C1) of axis (c) for the reasons explained below.

A threaded through hole 50 having an axis (a) is formed in circular outer profile 25a towards centre point (C1) ; and four through holes 51, 52, 53, 54 are formed radially equally towards centre point (C1), each with a respective longitudinal axis of symmetry (b), (d), (e), (f). As shown clearly in Figure 7, axes (a), (b), (d), (e), (f) converge towards centre point (C1), and each axis (b), (d), (e), (f) forms a 35° angle with first centreline LM1.

A respective depression 51a, 52a, 53a, 54a (see below) is therefore formed at the intersection of each through hole 51, 52, 53, 54 and the respective inner profile 25b*, 25b**. For example, depression 51a is practically located at the transition between first sector 33a and second sector 33b of portion 33. The same also applies to portions 34, 35, 36.

Hand-operated mechanical device 5 also comprises a metal disk 55 of a diameter D3 substantially equal to second diameter D2, and having a centre (C2) and axis (c).

In actual use, disk 55 is inserted inside contoured through hole 25b, with centre (C2) of the disk coinciding with centre point (C1). Metal disk 55 comprises, on its edge 55a, a diametrical through hole 56, the central axis of symmetry (g) of which is perpendicular to axis (c).

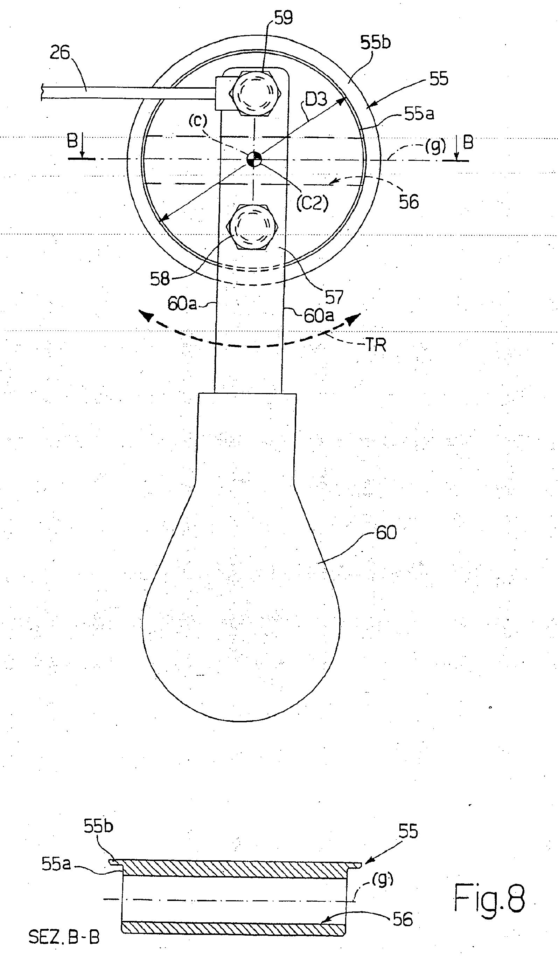

As shown in Figure 8, a tooth 55b projects from edge 55a and, in use, rests on a respective annular recess (shown in figure 7) on the inner face of metal ring 25.

In actual use, metal disk 55 is thus retained inside contoured through hole 25b, by being gripped between the recess formed on the inner face of metal ring 25 (which prevents outward withdrawal of metal disk 55) and a frame TL.

A flat bar 57 is fixed to metal disk 55, e.g. by means of two bolts 58, 59, and terminates with a knob 60 which, in use, is moved by the operator along an arc-shaped trajectory TR (see below).

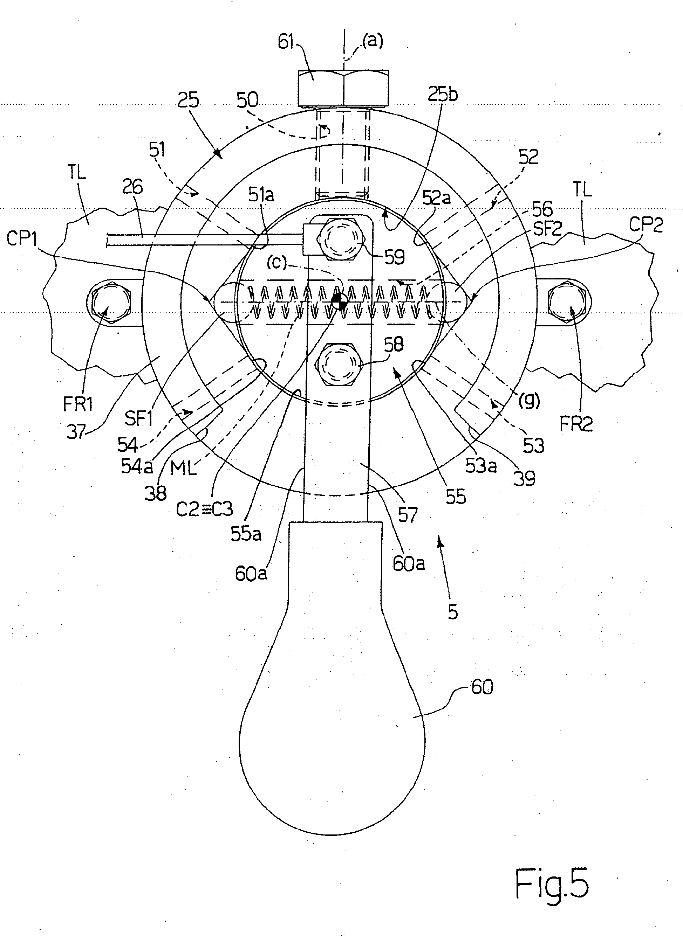

Device 5 is assembled as follows:
- metal disk 55 is inserted inside through hole 25b
- metal ring 25 is fixed to the tractor frame TL by means of two fasteners FR1, FR2;
- centres C2 and C3 coincide, and axis (g) of metal disk 55 is superimposed on axis (a) of threaded through hole 50;
- flat bar 57 (and therefore knob 60) is fixed to metal disk 55 by means of the two bolts 58, 59;
- at this point, a first steel ball SF1 is inserted first into threaded through hole 50 and then into through hole 56 (which are aligned), and, immediately thereafter, a helical spring ML and a second steel ball SF2 are equally inserted into hole 50;
- the first steel ball SF1, spring ML, and second steel ball SF2 are then tightened together by means of a bolt 61 screwed into threaded through hole 50;
- metal disk 55 is then rotated to position the two steel balls SF1, SF2 at cusp points CP1, CP2 (neutral points) respectively (Figure 5);
- at this point, the system is in the "neutral position", in which flat bar 57 is substantially aligned with axis (a) of threaded through hole 50;
- finally, a Bowden cable 26 is fitted to the head of bolt 59.

The Bowden cable 26 connects device 5 to the bottom end of a lever 27 (Figure 1) angularly integral with a pin 28, with which a further lever 31 is also angularly integral. The lever 31 comprises a roller 32, on its top end, contacting the bottom edge of lever 21 close to the end of lever 21 acting on distributor 13. A preloaded spring 38a is fitted between the top of lever 31 and a fixed body 39a.

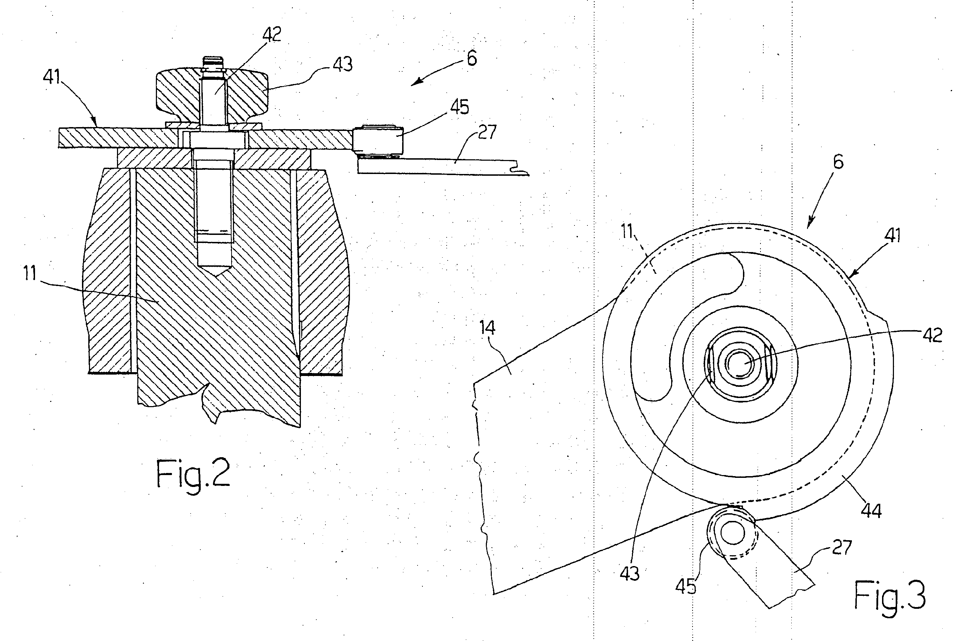

As shown in Figures 1, 2, 3, device 6 comprises a plate 41 fixed by a knob 43 to one end of rotating arm 11. Plate 41 is substantially circular and coaxial with arm 11. A sector-shaped appendix is formed along a sector of the peripheral edge of plate 41, and defines a cam 44, which is brought into contact with a roller 45 on the top end of lever 27.

The angular position of plate 41 is adjustable by simply loosening knob 43, setting plate 41 to the desired angle, and retightening knob 43. Reference points are provided on plate 41 to adjust the angular position of plate 41 correctly. Device 6 provides for setting the upward travel of the lifting device, in fast operating mode commanded by device 5, to the desired height according to the requirements of the implement connected to the tractor, and so as to cover the whole lift travel arc.

When the operator pushes knob 60 "forwards" along trajectory TR, pull is exerted on the Bowden cable to rotate lever 27 anticlockwise together with lever 31, which detaches roller 32 from lever 21 in opposition to spring 38a. As a result, lever 21 rotates clockwise away from valve 22 of distributor 13 and, by virtue of an internal spring, valve 22 switches from a neutral position to a drain position, thus draining the oil from cylinder 17 and thereby lowering the implement.

Conversely, when knob 60 is pulled "backwards", Bowden cable 26 is released, and spring 38a rotates levers 27 and 31 clockwise. Lever 31, by means of roller 32 and lever 21, acts on valve 22 of distributor 13 to deliver pressurized oil to cylinder 17 to thereby lift the implement, until rotation of arm 11 brings cam 44 into contact with roller 45 on lever 27.

As a result, lever 27 is rotated in the opposite direction to switch valve 22 of distributor 13 from the delivery position to the neutral position. The radial extension of cam 44 is calculated so that valve 22 only makes the switch described above. Anticlockwise rotation of lever 27 produces an equal rotation of lever 31, which, in opposition to spring 38a, only releases lever 21 by a distance depending on the radial extension of cam 44. Release of lever 21 causes valve 22 to switch from the delivery position to the neutral position, thus arresting upward travel of the lifting device.

At this point, the tractor can be reversed, and, once this is done, the operator pushes knob 60 "forwards" again to lower the implement according to the device 4 setting, as determined by the positions of the draft and position control levers. Setting the upward travel of the lifting device to an upward limit, when in fast operating mode, consists in determining the height of the lifting device at which cam 44 contacts roller 45, and therefore the angular position in which plate 41 is fixed to arm 11 with respect to the position of roller 45 when the lifting device is in the lowered position.

The above setting must, obviously, be calculated according to the implement connected to the tractor.

With reference once more to hand-operated mechanical device 5, when knob 60 is pushed "forward", first ball SF1 moves along ramp sector 33a, while second ball SF2 moves along ramp sector 35a.

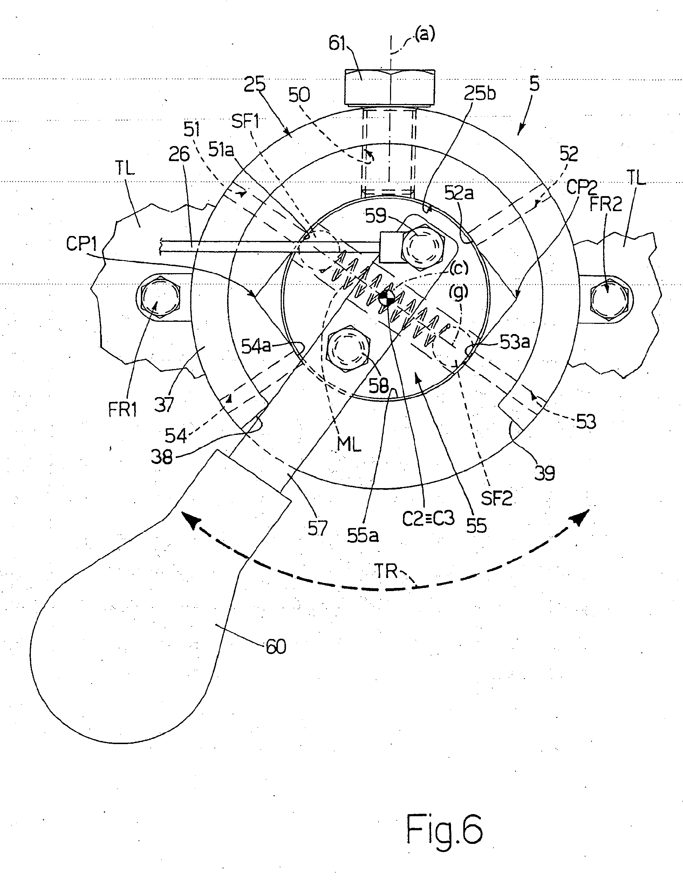

Knob 60 can be pushed "forward" by the operator until a side 60a of flat bar 57 contacts stop 38, and balls SF1, SF2, stressed by spring ML, come to rest inside depressions 51a, 53a respectively. In other words, depressions 51a, 53a act as stops for respective balls SF1, SF2 (Figure 6).

Conversely, when knob 60 is pulled "backwards", first ball SF1 moves along ramp sector 36a, while second ball SF2 moves along ramp sector 34a.

Knob 60 can be pulled "backwards" by the operator until a side 60b of flat bar 57 contacts stop 39, and balls SF1, SF2, stressed by spring ML, come to rest inside depressions 54a, 52a respectively. In other words, depressions 54a, 52a act as stops for respective balls SF1, SF2.

The profiles of ramp sectors 33a, 34a, 35a, 36a, the characteristics of spring ML, and the surface properties of balls SF1, SF2 are designed to ensure precise control of Bowden cable 26 at all times.

Mechanical device 5 must also be ergonomic, and provide for gradual control that is also perceptible manually by the operator. By skillfully selecting the shape and angle of ramp sectors 33a, 34a, 35a, 36a and the mechanical characteristics of spring ML, knob 60 can be shifted along trajectory TR with not too much effort on the part of the operator, while at the same time ensuring gradual control, allowing the operator to remain in full control at all times.

The advantages of the present invention will be clear from the foregoing description.

In particular, a straightforward, reliable hand-operated mechanical device 5 is achieved, which replaces and greatly simplifies the one described in document GB-A-2 219 920 (Fiatgeotech - Tecnologie per la Terra SpA).

## Claims

1. A lifting/lowering assembly (1) for lifting/lowering an implement connected to a farm tractor, the assembly comprising a first device (2) for attaching said implement to said farm tractor; a second lifting device (3) for lifting and lowering said implement; a third control and adjustment device (4) having a lever mechanism located between the first device (2) and the second device (3) to set the operating mode of said implement; and a hand-operated fourth device (5) for controlling up/down movement of said implement in so-called "fast operating" mode;
**characterized in that** said fourth device (5) comprises:
- a metal ring (25) having a circular outer profile (25a) with a central axis (c), and a contoured through hole (25b) centred with respect to said circular outer profile (25a); said contoured through hole (25b) in turn comprising two inner profiles (25b*, 25b**) specularly symmetrical with respect to a first centreline (LM1); the inner profiles (25b*, 25b**) being joined at cusp points (CP1, CP2) lying along said first centreline (LM1);
- a metal disk (55), also having central axis (c) and inserted, in use, inside said contoured through hole (25b); said metal disk (55) having a diametrical through hole (56), the central axis of symmetry (g) of which is perpendicular to said central axis (c); said diametrical through hole (56) housing a first ball (SF1), elastic means (ML), and a second ball (SF2); said elastic means (ML) being interposed between said first ball (SF1) and said second ball (SF2) to push them, on opposite sides, against said inner profiles (25b*, 25b**); and control transmission means (26) being integral with said metal disk (55); and
- a lever (57) also integral with said metal disk (55), and which, in use, is moved by an operator along an arc-shaped trajectory (TR) to achieve the desired manual control.

2. A lifting/lowering assembly (1) according to claim 1, **characterized in that** each of said inner profiles (25b*; 25b**) comprises two portions (33, 34; 35, 36); and **in that** the pairs of portions (33, 36; 34, 35) are specularly symmetrical with respect to a second centreline (LM2).

3. A lifting/lowering assembly (1) according to claim 2, **characterized in that** said centrelines (LM1, LM2) are perpendicular to each other, and intersect at a central point (C1).

4. A lifting/lowering assembly (1) according to claim 2 or 3, **characterized in that** each portion (33, 34, 35, 36) comprises a first sector (33a, 34a, 35a, 36a) substantially in the form of a straight ramp; and a second sector (33b, 34b, 35b, 36b) substantially in the form of an arc of a circle.

5. A lifting/lowering assembly (1) according to claim 4, **characterized in that** said second sectors (33b, 34b, 35b, 36b) lie on an ideal circle having a diameter (D2).

6. A lifting/lowering assembly (1) according to any of the preceding claims, **characterized in that** an annular projection (37), having two stops (38, 39) for said lever (57), is located between said circular outer profile (25a) and said inner profiles (25b*, 25b**).

7. A lifting/lowering assembly (1) according to claim 3 and any claim dependent thereon, **characterized in that** said metal disk (55) further comprises four radially provided through holes (51, 52, 53, 54), each having a respective longitudinal axis of symmetry (b), (d), (e), (f), which converge towards said central point (C1).

8. A lifting/lowering assembly (1) according to claim 7, **characterized in that** each axis (b), (d), (e), (f) forms a 35° angle with said first centreline (LM1).

9. A lifting/lowering assembly (1) according to claim 7 or 8, **characterized in that,** at the intersection of each through hole (51, 54; 52, 53) with one of the two inner profiles (25b*, 25b**), a respective depression (51a, 54a; 52a, 53a) is formed which acts as a stop for said first ball (SF1) and said second ball (SF2) respectively.

10. A lifting/lowering assembly (1) according to any of the preceding claims, **characterized in that** said control transmission means (26) comprises a Bowden cable.

11. A lifting/lowering assembly (1) according to any of the preceding claims, **characterized in that,** when the balls (FS1, FS2) are facing the cusp points (CP1, CP2), said control transmission means (26) are in a neutral condition.

12. A lifting/lowering assembly (1) according to claim 9 and any claim dependent thereon, **characterized in that,** when the balls (FS1, FS2) are facing said depressions (51a, 53a), respectively depressions (52a, 54a), said control transmission means (26) are in a fast lowering, respectively fast raising condition.

13. A lifting/lowering assembly (1) according to claim 11 and 12 when depended directly or indirectly to claim 4, **characterized in that,** when the balls (FS1, FS2) are moving along said ramp sectors (33a, 34a, 35a, 36a), gradual control in between neutral and fast mode is ensured.

## Patentansprüche

1. Anhebe-/Absenkanordnung zum Anheben/Absenken eines mit einem Ackerschlepper verbundenen Arbeitsgerätes, wobei die Anordnung eine erste Vorrichtung zum Anbringen des Arbeitsgerätes an dem Ackerschlepper; eine zweite Anhebevorrichtung (3) zum Anheben und Absenken des Arbeitsgerätes; eine dritte Steuer- und Einstellvorrichtung (4) mit einem Hebelmechanismus, der zwischen der ersten Vorrichtung (2) und der zweiten Vorrichtung (3) angeordnet ist, um die Betriebsart des Arbeitsgerätes einzustellen; und eine handbetätigte vierte Vorrichtung (5) zum Steuern der Aufwärts-/Abwärts-Bewegung des Arbeitsgerätes in der sogenannten "schnellen Betriebsart" umfasst;
**dadurch gekennzeichnet, dass** die vierte Vorrichtung (5) Folgendes umfasst:
- einen Metallring (25). der ein kreisförmiges Außenprofil (25a) mit einer Mittelachse (c) und einer konturierten Durchgangsöffnung (25b) aufweist, die bezüglich des kreisförmigen Außenprofils (25a) zentriert ist; wobei die konturierte Durchgangsöffnung (25b) ihrerseits zwei Innenprofile (25b*, 25b**) aufweist, die spiegelsymmetrisch bezüglich einer ersten Mittellinie LM1 angeordnet sind; wobei die Innenprofile (25b*, 25b**) an Scheitelpunkten (CP1, CP2) miteinander verbunden sind, die entlang der ersten Mittellinie (LM1) liegen;
- eine Metallscheibe (55), die ebenfalls eine Mittelachse (c) aufweist und im Gebrauch in das Innere der konturierten Durchgangsöffnung (25b) eingesetzt ist, wobei die Metallscheibe (55) eine symmetrische Durchgangsöffnung (56) aufweist, wobei die Symmetrie-Mittelachse (g) hiervon unter einem rechten Winkel zu der Mittelachse (c) ist, wobei die diametrale Durchgangsöffnung (56) eine erste Kugel (SF1), elastische Einrichtung (ML) und eine zweite Kugel (SF2) aufnimmt; wobei die elastischen Einrichtungen (ML) zwischen der ersten Kugel (SF1) und der zweiten Kugel (SF2) angeordnet sind, um diese auf entgegengesetzten Seiten gegen die Innenprofile (25b*, 25b**) zu drücken; und wobei eine Steuer-Übertragungseinrichtung (26) einstückig mit der Metallscheibe (55) ausgebildet ist; und
- einen Hebel (57), der ebenfalls einstückig mit der Metallscheibe (55) ausgebildet ist und der im Gebrauch von einem Fahrer entlang einer bogenförmigen Bewegungsbahn (TR) bewegt wird, um die gewünschte manuelle Steuerung zu erzielen.

2. Anhebe-/Absenk-Anordnung (1) nach Anspruch 1, **dadurch gekennzeichnet, dass** jedes der Innenprofile (25b*; 25b**) zwei Teile (33, 34; 35, 36) umfasst, und dass die Paare von Teilen (33, 36; 34, 35) spiegelsymmetrisch bezüglich einer zweiten Mittellinie (ML2) sind.

3. Anhebe-/Absenk-Anordnung (1) nach Anspruch 2, **dadurch gekennzeichnet, dass** die Mittellinien (LM1, LM2) senkrecht zueinander sind und sich an einem zentralen Punkt (C1) schneiden.

4. Anhebe-/Absenk-Anordnung (1) nach Anspruch 2 oder 3, **dadurch gekennzeichnet, dass** jeder Teil (33, 34, 35, 36) einen ersten Sektor (33a, 34a, 35a, 36a) im Wesentlichen in Form einer geraden Rampe und einen zweiten Sektor (33b, 34b, 35b, 36b) im Wesentlichen in Form eines Kreisbogens umfasst.

5. Anhebe-/Absenk-Anordnung (1) nach Anspruch 4, **dadurch gekennzeichnet, dass** die zweiten Sektoren (33b, 34b, 35b, 36b) auf einem Idealkreis mit einem Durchmesser (D2) liegen.

6. Anhebe-/Absenk-Anordnung (1) nach einem der vorhergehenden Ansprüche, **dadurch gekennzeichnet, dass** ein kreisringförmiger Vorsprung (37) mit zwei Anschlägen (38, 39) für den Hebel (57) zwischen dem kreisförmigen Außenprofil (25a) und den Innenprofilen (25b*, 25b**) liegt.

7. Anhebe-/Absenk-Anordnung (1) nach Anspruch 3 und einem hierauf rückbezogenen Anspruch, **dadurch gekennzeichnet, dass** die Metallscheibe (55) weiterhin vier in Radialrichtung vorgesehene Durchgangsbohrungen (51, 52, 53, 54) aufweist, die jeweils eine jeweilige Längs-Symmetrieachse (b), (d), (e), (f) aufweisen, die in Richtung auf den Mittelpunkt (C1) konvergieren.

8. Anhebe-/Absenk-Anordnung (1) nach Anspruch 7, **dadurch gekennzeichnet, dass** jede Achse (b), (d), (e), (f) einen 35 °-Winkel mit der ersten Mittellinie (LM1) bildet.

9. Anhebe-/Absenk-Anordnung (1) nach Anspruch 7 oder 8, **dadurch gekennzeichnet, dass** an dem Schnittpunkt jeder Durchgangsbohrung (51, 54; 52, 53) mit einem der Innenprofile (25b*, 25b**) eine jeweilige Vertiefung (51a, 54a; 52a, 53a) ausgebildet ist, die als ein Anschlag für die erste Kugel (SF1) bzw. die zweite Kugel (SF2) wirkt.

10. Anhebe-/Absenk-Anordnung (1) nach einem der vorhergehenden Ansprüche, **dadurch gekennzeichnet, dass** die Steuer-Übertragungseinrichtung (26) einen Bowdenzug umfasst.

11. Anhebe-/Absenk-Anordnung (1) nach einem der vorhergehenden Ansprüche, **dadurch gekennzeichnet, dass** wenn die Kugeln (FS1, FS2) auf die Scheitelpunkte (CP1, CP2) gerichtet sind, die Steuer-Übertragungseinrichtungen (26) sich in einem Neutralzustand befinden.

12. Anhebe-/Absenk-Anordnung (1) nach Anspruch 9 und irgendeinem hiervon abhängigen Anspruch, **dadurch gekennzeichnet, dass** wenn die Kugeln (FS1, FS2) auf die Vertiefungen (51 a, 53a) bzw. die Vertiefungen (52a, 54a) gerichtet sind, die Steuer-Übertragungseinrichtungen (26) sich in einem Schnellhebe- bzw. Schnellabsenk-Zustand befinden.

13. Anhebe-/Absenk-Anordnung (1) nach Anspruch 11 und 12, bei direkter oder indirekter Rückbeziehung auf Anspruch 4, **dadurch gekennzeichnet, dass** wenn die Kugeln (FS1, FS2) sich entlang der Rampen-Sektoren (33a, 34a, 35a, 36a) bewegen, eine graduelle Steuerung zwischen der neutralen und der schnellen Betriebsart sichergestellt ist.

## Revendications

1. Ensemble de levage/abaissement (1) destiné à lever/abaisser un outil attelé à un tracteur de ferme, l'ensemble comprenant un premier dispositif (2) pour connecter ledit outil audit tracteur de ferme, un second dispositif de levage (3) pour lever et abaisser ledit outil, un troisième dispositif de contrôle et d'ajustement (4) comportant un mécanisme de levier situé entre le premier dispositif (2) et le second dispositif (3) pour régler le mode de fonctionnement dudit outil, et un quatrième dispositif commandé à la main (5) pour commander le mouvement de levée/abaissement dudit outil dans ce que l'on nomme un mode de « commande rapide »,
**caractérisé en ce que** ledit quatrième dispositif (5) comprend :
- une couronne métallique (25) ayant un profil extérieur circulaire (25a) avec un axe géométrique central (c), et un trou traversant profilé (25b) centré par rapport audit profil extérieur circulaire (25a), ledit trou traversant profilé (25b) comprenant à son tour deux profils intérieurs (25b*, 25b**) spéculairement symétriques par rapport à un premier axe central (LM1), les profils intérieurs (25b*, 25b**) étant reliés aux points de rebroussement (CP1, CP2) disposés le long dudit premier axe central (LM1),
- un disque de métal (55), ayant également un axe central (c) et inséré, en service, à l'intérieur dudit trou traversant profilé (25b), ledit disque de métal (55) comportant un trou traversant diamétral (56), dont l'axe central de symétrie (g) est perpendiculaire audit axe central (c), ledit trou traversant diamétral (56) contenant une première bille (SF1), un moyen élastique (ML), et une seconde bille (SF2), ledit moyen élastique (ML) étant interposé entre ladite première bille (SF1) et ladite seconde bille (SF2) pour les pousser, aux côtés opposés, contre lesdits profils intérieurs (25b*, 25b**), et le moyen de transmission de commande (26) étant solidaire dudit disque de métal (55), et
- un levier (57) également solidaire avec ledit disque de métal (55), et qui, en service, est actionné par un opérateur le long d'une trajectoire en forme d'arc (TR) pour exécuter la commande manuelle désirée.

2. Ensemble de levage/abaissement (1) selon la revendication 1, **caractérisé en ce que** chacun des dits profils intérieurs (25b*; 25b**) comprend deux portions (33, 34; 35, 36), et **en ce que** les paires de portions (33, 36; 34, 35) sont spéculairement symétriques par rapport à un second axe central (LM2).

3. Ensemble de levage/abaissement (1) selon la revendication 2, **caractérisé en ce que** lesdits axes centraux (LM1, LM2) sont perpendiculaires entre eux, et s'intersectent à un point central (C1).

4. Ensemble de levage/abaissement (1) selon la revendication 2 ou 3, **caractérisé en ce que** chaque portion (33, 34, 35, 36) comprend un premier secteur (33a, 34a, 35a, 36a) sensiblement en forme de rampe droite, et un second secteur (33b, 34b, 35b, 36b) sensiblement en forme d'un arc de cercle.

5. Ensemble de levage/abaissement (1) selon la revendication 4, **caractérisé en ce que** lesdits second secteurs (33b, 34b, 35b, 36b) se trouvent sur un cercle idéal au diamètre (D2).

6. Ensemble de levage/abaissement (1) selon l'une quelconque des revendications précédentes, **caractérisé en ce que** une saillie annulaire (37), comportant deux butées (38, 39) pour ledit levier (57), est située entre ledit profil extérieur circulaire (25a) et lesdits profils intérieurs (25b*, 25b**).

7. Ensemble de levage/abaissement (1) selon la revendication 3 et toute revendication s'y rapportant, **caractérisé en ce que** ledit disque de métal (55) comprend en plus quatre trous traversants disposés radialement (51, 52, 53, 54), chacun ayant un axe de symétrie longitudinal respectif (b), (d), (e), (f), qui convergent vers ledit point central (C1).

8. Ensemble de levage/abaissement (1) selon la revendication 7, **caractérisé en ce que** chaque axe (b), (d), (e), (f) forme un angle de 35° avec ledit axe central (LM1).

9. Ensemble de levage/abaissement (1) selon la revendication 7 ou 8, **caractérisé en ce que,** à l'intersection de chaque trou traversant (51, 54; 52, 53) avec l'un des deux profils intérieurs (25b*, 25b**), un creux respectif (51 a, 54a; 52a, 53a) est formé qui agit comme une butée respectivement pour ladite première bille (SF1) et ladite seconde bille (SF2).

10. Ensemble de levage/abaissement (1) selon l'une quelconque des revendications précédentes, **caractérisé en ce que** ledit moyen de transmission de commande (26) comprend un câble Bowden.

11. Ensemble de levage/abaissement (1) selon l'une quelconque des revendications précédentes, **caractérisé en ce que**, lorsque les billes (FS1, FS2) sont en face des points de rebroussement (CP1, CP2), lesdits moyens de transmission de commande (26) sont dans un état neutre.

12. Ensemble de levage/abaissement (1) selon la revendication 9 et toute revendication s'y rapportant, **caractérisé en ce que**, lorsque les billes (FS1, FS2) sont en face des dits creux (51 a, 53a), et respectivement des creux (52a, 54a), les dits moyens de transmission de commande (26) sont dans un état respectif d'abaissement rapide ou de levage rapide.

13. Ensemble de levage/abaissement (1) selon la revendication 11 et 12 lorsqu'elle est dépendante directement ou indirectement de la revendication 4, **caractérisé en ce que**, lorsque les billes (FS1, FS2) se déplacent le long des secteurs de rampe (33a, 34a, 35a, 36a), une commande progressive entre un mode neutre et un mode rapide est octroyée.
